# FASCICULE DE BREVET EUROPEEN

(11) **EP 2 683 588 B1**
(45) Date de publication et mention de la délivrance du brevet: **02.05.2018**
(21) Numéro de dépôt: 12714761.9
(22) Date de dépôt: 09.03.2012
(51) Int. Cl.: F16C 33/78, F16C 41/00, F16C 19/38, F16C 19/52, G01P 1/02, G01P 3/44, B61F 15/20

(54) **ASSEMBLAGE INSTRUMENTÉ POUR PALIER A ROULEMENT ET BOÎTE D'ESSIEU INSTRUMENTÉE**
INSTRUMENTIERTE ANORDNUNG FÜR EIN WÄLZLAGER UND INSTRUMENTIERTE ACHSBUCHSE
INSTRUMENTED ASSEMBLY FOR A ROLLING BEARING AND INSTRUMENTED AXLE BOX

(30) Priorité: 10.03.2011 FR 1100726
(43) Date de publication de la demande: 15.01.2014
(73) Titulaire: NTN-SNR Roulements, 74010 Annecy (FR)
(72) Inventeur: BALLAS, Gérard, F-74960 Cran Gevrier (FR); BERTHIER, Julien, F-74410 Saint Jorioz (FR); GUERRE-CHALEY, Frédéric, F-74230 Dingy Saint Clair (FR); VANDAMME, Etienne, F-74650 Chavanod (FR)
(74) Mandataire: Alatis
(86) Numéro de dépôt international: PCT/FR2012/050498
(87) Numéro de publication internationale: WO 2012/120244

(56) Documents cités:
- EP-A1- 2 186 705
- FR-A1- 2 669 598
- FR-A1- 2 927 962
- US-A1- 2006 110 086

## Description

### DOMAINE TECHNIQUE DE L'INVENTION

L'invention se rapporte à l'instrumentation d'un palier à roulement logé dans un carter, et notamment d'un palier à roulement de grand diamètre tel que, par exemple, un palier à roulement de boîte d'essieu de véhicule ferroviaire. Par instrumentation, on entend ici la mise en place de moyens de mesure de certains paramètres de fonctionnement du roulement, et notamment de mesure de vitesse, de température ou de vibrations. Plus spécifiquement, l'invention vise un assemblage à roulement comportant une telle instrumentation.

### ÉTAT DE LA TECHNIQUE ANTÉRIEURE

Dans le document EP 2 186 705 A1 (correspondant aux préambules des revendications indépendantes de produit 1 et 10) est décrit une boîte d'essieu ferroviaire dans laquelle est logé un assemblage à roulement instrumenté pour une fusée d'essieu. Le roulement comporte une bague intérieure rotative fixée sur la fusée d'essieu et une bague extérieure fixe, entre lesquelles sont disposés des corps roulants assurant une liaison rotative entre lesdites bagues. Un déflecteur fixe délimite un volume intérieur du roulement, pourvu d'un lubrifiant. Un codeur magnétique annulaire lié en rotation à la bague intérieure est fixé à une entretoise rotative s'interposant entre le chapeau de fusée d'essieu et la bague intérieure, en appui axial direct ou indirect sur la bague intérieure du roulement, à l'extérieur du volume intérieur délimité par le déflecteur. Un capteur magnétique fixe est disposé à une distance d'entrefer radial du codeur annulaire pour détecter les déplacements du codeur annulaire. Ce capteur est fixé au couvercle de la boîte d'essieu dans un logement prévu à cet effet. La chaine de cote met en jeu plusieurs pièces entre le codeur et le capteur, ce qui impose, pour un positionnement précis, des tolérances très faibles.

Dans le document FR 2 669 598 A1 est décrit un roulement de boîte d'essieu ferroviaire instrumenté comportant une bague extérieure fixe équipée d'un déflecteur fixe, une bague intérieure tournante, un déflecteur tournant plaqué contre la bague intérieure tournante par l'intermédiaire d'une entretoise maintenue par un chapeau de fusée. Les deux déflecteurs forment entre eux une perte de charge et délimitent avec les bagues un volume intérieur au roulement. Le déflecteur tournant est pourvu d'un anneau codeur multipolaire, dont l'information est lue par un capteur pourvu d'une tête de lecture traversant le déflecteur fixe et située dans le volume intérieur du roulement. Ce capteur est lié à l'extérieur par un câble de connexion électrique qui traverse le corps de boîte d'essieu par un orifice. Pour assembler le capteur sur le déflecteur, il est nécessaire d'intervenir avant fermeture du couvercle de la boîte d'essieu. Inversement, pour démonter le capteur ou le repositionner, il est nécessaire d'ouvrir le couvercle de la boîte. La maintenance du dispositif s'en trouve compliquée.

Dans le document US 2006/110086 A1 est illustré une boîte d'essieu de véhicule comportant un carter incluant un corps de carter et un couvercle fermant le corps de carter, le carter présentant un orifice, et permettant de loger un palier à roulement comportant une bague fixe par rapport au carter et une bague tournante, un déflecteur annulaire fixe étant solidaire de la bague fixe, un codeur annulaire tournant étant solidaire de la bague tournante. Cet assemblage est instrumenté d'un capteur comportant une tête de lecture, un corps de capteur solidaire de la tête de lecture et un câble électrique de connexion, la tête de lecture étant positionnée et maintenue en appui sur le déflecteur annulaire fixe par une interface de maintien et disposée en regard et à distance d'entrefer du codeur. Un bouchon ferme l'orifice et est traversé par le câble de connexion. Toutefois, ce bouchon est disposé en déport par rapport au capteur. Il n'est pas prévu que le capteur puisse être mis en place après fermeture du couvercle du carter.

### EXPOSÉ DE L'INVENTION

L'invention vise à remédier à tout ou partie des inconvénients de l'état de la technique identifiés ci-dessus, et notamment à minimiser la chaine de cotes entre capteur et codeur, tout en assurant un montage et un démontage simples.

Pour ce faire est proposé selon un premier aspect de l'invention tel que défini par la première revendication indépendante un assemblage instrumenté comportant :
- un carter comportant un corps de carter et un couvercle fermant le corps de carter, le carter présentant un orifice,
- un palier à roulement logé dans le carter, comportant une bague fixe par rapport au carter et une bague tournante,
- un déflecteur annulaire fixe solidaire de la bague fixe,
- un codeur annulaire tournant solidaire de la bague tournante, et
- un sous-ensemble d'instrumentation comportant :
   - un capteur comportant au moins une tête de lecture, un corps de capteur solidaire de la tête de lecture et un câble électrique de connexion, la tête de lecture étant positionnée et maintenue en appui sur le déflecteur annulaire fixe ou la bague fixe par une interface de maintien et disposée en regard et à distance d'entrefer du codeur, et
   - un bouchon fermant l'orifice et traversé par le câble de connexion, le bouchon présentant une cavité pour loger au moins une partie du corps de capteur avec un jeu fonctionnel conférant au corps de capteur au moins trois degrés de liberté de translation et un degré de liberté de rotation par rapport au bouchon.

La cavité du bouchon permet de protéger le capteur durant le montage et le démontage et facilite l'insertion du capteur au travers de l'orifice. Les degrés de libertés conférés au capteur permettent de positionner ce dernier par rapport au codeur avec précision, indépendamment du positionnement imprécis du bouchon.

Suivant un mode de réalisation, le bouchon et le capteur forment un sous-ensemble d'instrumentation cohérent, le capteur étant extractible du carter par l'orifice avec le bouchon après désolidarisation de l'interface de maintien du capteur et de l'interface de fixation du bouchon. On peut notamment prévoir qu'une extrémité du câble soit fixée au bouchon, le câble ayant alors une flexibilité compatible avec les degrés de liberté de mouvement du capteur par rapport au bouchon.

Selon un mode de réalisation, l'interface de maintien du capteur comporte au moins une vis de fixation coopérant avec un trou fileté du déflecteur. Le bouchon peut alors avantageusement être pourvu d'au moins un puits d'accès pour accéder à l'interface de maintien du capteur lorsque le bouchon est fixé au carter par l'interface de fixation. Le sous-ensemble constitué par le capteur et le bouchon forme un tout qui peut être monté et démonté par l'intermédiaire du ou des puits d'accès sans nécessiter une ouverture du couvercle du carter.

De manière similaire, l'interface de fixation du bouchon peut comporter au moins une vis de fixation coopérant avec un trou fileté du carter. Le puits d'accès est alors calibré pour permettre l'insertion d'une clé ou d'un tournevis pour fixer le capteur.

Préférentiellement, le puits d'accès est fermé par un capuchon.

L'assemblage trouve un champ d'application particulièrement intéressant dans les boîte d'essieu de véhicules, notamment de véhicules lourds à roulements de grand diamètre, et notamment dans les boîtes d'essieu ferroviaire.

Suivant un autre aspect de l'invention tel que défini par la revendication indépendante 10, celle-ci a également trait à un sous-ensemble d'instrumentation pour un assemblage tel que précédemment défini, qui comporte :
- un capteur comportant au moins une tête de lecture et un câble électrique de connexion, la tête de lecture étant apte à être fixée au déflecteur annulaire fixe ou à la bague fixe par une interface de maintien et à être disposée en regard et à distance d'entrefer du codeur, et
- un bouchon comportant un collier de fixation du câble, une interface de fixation au carter et au moins un puits d'accès permettant un accès à l'interface de maintien du capteur.

Préférentiellement, le capteur comporte en outre un corps de capteur solidaire de la tête de lecture, le bouchon présentant une cavité pour loger au moins une partie du corps de capteur avec un jeu fonctionnel conférant au corps de capteur au moins trois degré de liberté de translation et un degré de liberté de rotation par rapport au bouchon. Cette cavité permet de protéger le capteur durant le montage et le démontage et faciliter l'insertion du capteur au travers de l'orifice. Les degrés de libertés conférés au capteur permettent de positionner ce dernier par rapport au codeur avec précision, indépendamment du positionnement imprécis du bouchon. Le câble dispose d'une flexibilité compatible avec les mouvements souhaités du capteur par rapport au bouchon.

Des moyens de liaison peuvent être prévus entre le capteur et le bouchon, aptes à limiter les mouvements du corps de capteur et à empêcher le corps de capteur de sortir de la cavité. Ceci permet d'éviter notamment une trop forte tension sur le câble en cas de mauvaise utilisation du sous-ensemble.

Suivant un autre aspect de l'invention tel que défini par la revendication indépendante 13, celle-ci a trait à un procédé d'assemblage d'un capteur sur un palier à roulement logé dans un carter comportant un corps de carter et un couvercle fermant le corps de carter, comportant les étapes successives suivantes :
- montage du palier à roulement dans le corps de carter, de sorte que la palier comporte une bague fixe par rapport au carter et une bague tournante,
- assemblage du couvercle sur le corps de carter,
- insertion d'une tête de lecture par un orifice ménagé dans le carter, la tête de capteur étant liée à un bouchon venant clore l'orifice,
- fixation de la tête de lecture à la bague fixe ou à un déflecteur rapporté sur la bague fixe, au travers d'un puits d'accès ménagé dans le bouchon.

On peut prévoir en outre une étape de fixation du bouchon au carter, qui peut soit succéder soit être concomitante à l'étape de fixation de la tête de lecture. On peut également prévoir une étape d'obturation du puits d'accès.

Le démontage peut être effectué en prévoyant successivement, et sans qu'il soit nécessaire d'ouvrir le couvercle du carter :
- la séparation de la tête de capteur par démontage de l'interface de maintien du capteur, puis
- le retrait de la tête de capteur par l'orifice.

Naturellement, dans le cas où le puits d'accès est obturé par un capuchon, il sera nécessaire au préalable d'ôter celui-ci.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'une boîte d'essieu instrumenté selon un mode de réalisation de l'invention ;
- la figure 2, une vue en coupe selon le plan de coupe II-II de la figure 1 ;
- la figure 3, une vue en coupe d'un deuxième mode de réalisation de l'invention,
- la figure 4, une vue en coupe d'un troisième mode de réalisation de l'invention,
- la figure 5, une vue en coupe d'un troisième mode de réalisation de l'invention.

Pour plus de clarté, les éléments identiques ou similaires sont repérés par des signes de référence identiques sur l'ensemble des figures.

### DESCRIPTION DETAILLEE D'UN MODE DE RÉALISATION

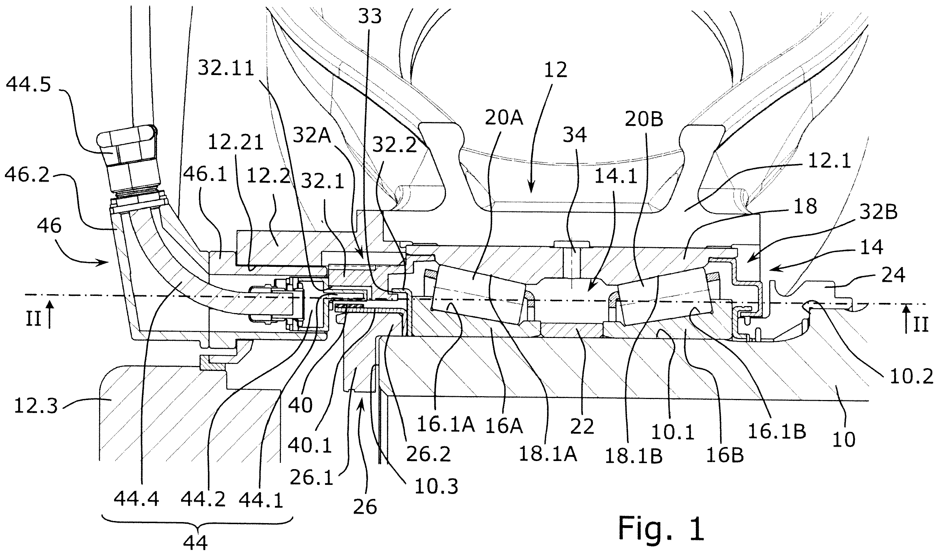

La figure 1 illustre une fusée d'essieu **10** de véhicule ferroviaire, montée en rotation à l'intérieur d'un carter de boîte d'essieu **12** par l'intermédiaire d'un roulement **14** comportant au moins une bague intérieure **16A,** au moins une bague extérieure **18** et des corps roulants **20A, 20B.** En l'espèce, mais ceci est sans caractère limitant pour la présentation de l'invention, le roulement est à deux rangées de corps roulants, les corps roulants **20A, 20B** étant constitués par des rouleaux coniques, ces rouleaux roulant sur la bague extérieure **18** à deux chemins de roulement **18.1**A, **18.1**B et sur deux chemins de roulement **16.1**A, **16.1**B formés sur deux bagues intérieures **16A, 16B,** une par rangée de rouleaux **20A, 20B,** séparées par une entretoise **22.**

L'axe de rotation de la fusée d'essieu constitue un axe de référence pour le dispositif. Les bagues intérieures **16A, 16B** sont emmanchées sur une portée cylindrique **10.1** de la fusée d'essieu. Une entretoise **24** peut être interposée entre les bagues intérieures **16A, 16B** et un épaulement **10.2** de la fusée d'essieu **10.** Pour maintenir axialement cet assemblage, un chapeau de fusée **26** présentant un fond **26.1** et une jupe **26 .2** est fixé à l'extrémité libre **10.3** de la fusée **10** par l'intermédiaire de moyens de fixation, en l'espèce des vis (non représentées) traversant des alésages usinés dans le fond **26.1** du chapeau de fusée **26** et vissés dans des trous filetés à l'extrémité **10.3** de la fusée d'essieu **10.** Une ou plusieurs entretoises peuvent le cas échéant être interposées entre l'extrémité libre de la jupe **26.2** du chapeau de fusée et les bagues intérieures **16A, 16B** du roulement. La chaine de cotes est telle que lors du vissage des vis de fixation à un couple prédéterminé de montage, le chapeau de fusée **26** vient contraindre axialement les bagues intérieures **16A, 16B** du roulement en direction de l'épaulement **10.2,** par l'intermédiaire des entretoises si celles-ci sont présentes.

La bague extérieure **18** est montée dans un corps de carter cylindrique **12.1** du carter de boîte d'essieu **12,** fermé par un couvercle **12.2** qui recouvre le chapeau de fusée **26.** La partie centrale du couvercle est occupée par un collecteur de courant (non représenté) pour établir un chemin de courant entre la fusée d'essieu et la superstructure du véhicule.

Les bagues **16A, 16B** et **18** délimitent entre elles un volume **14.1** pour les corps roulants, volume qui est clos axialement par des systèmes d'étanchéité **32A, 32B,** constitués dans cet exemple par des déflecteurs délimitant entre eux, sans contact, une perte de charge ou chicane limitant la pénétration de polluants dans le roulement et la sortie de lubrifiant. On distingue également sur la figure **1** un canal **34** permettant de recharger régulièrement le roulement en lubrifiant.

Le système d'étanchéité **32A** situé du côté du chapeau de fusée **26** est constitué par au moins un déflecteur fixe **32.1** emmanché sur la bague fixe **18,** et un déflecteur tournant **32.2** pincé entre le chapeau de fusée **26** et la bague intérieure **16A.** Une perte de charge **33** est constituée entre le déflecteur fixe **32.1** et le déflecteur tournant **32.2.** Un anneau codeur multipolaire **40,** est fixé à un support annulaire **40.1,** pincé comme le déflecteur mobile **32.2** entre le chapeau de fusée **26** et la bague intérieure **16A.** Le déflecteur fixe **32.1** recouvre l'anneau codeur **40** et est pourvu d'un logement **32.11** situé en regard de l'anneau codeur **40.**

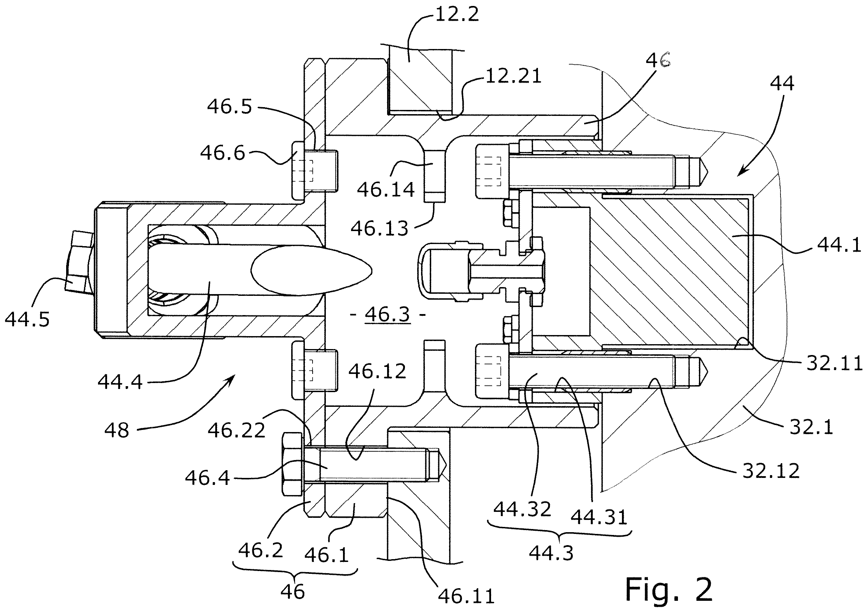

La boîte d'essieu est équipée d'un capteur **44** présentant une tête de lecture **44.1** qui vient se positionner dans le logement **32.11** en regard et à distance d'entrefer de l'anneau codeur multipolaire **40** de manière à lire l'information portée par le codeur **40.** Le capteur **44** présente en outre un corps **44.2** solidaire de la tête de lecture **44.1** et pourvu d'une interface de maintien **44.3** avec le déflecteur fixe, illustrée en détail sur la figure **2****.** Cette interface de maintien **44.3** est constituée par des formes spécifiques du corps de capteur **44.2** qui viennent au contact de formes complémentaires prévues sur le déflecteur fixe **32.1,** et de trous de passage **44.31** pour des vis de fixation **44.32** qui viennent se visser dans des trous filetés **32.12** du déflecteur fixe **32.1** pour y fixer le capteur **44.** Le capteur comporte également un câble **44.4** de connexion électrique avec l'extérieur, dont une extrémité libre équipée d'un presse-étoupe **44.5** fait saillie hors de la boîte d'essieu au travers d'un orifice **12.21** prévu à cet effet dans le couvercle **12.2.**

Comme illustré plus particulièrement sur la figure **2**, l'orifice **12.21** est fermé par un bouchon **46** qui, dans ce mode de réalisation, est constitué en deux parties, à savoir une traversée **46.1** pénétrant dans l'orifice **12.21** et un prolongement externe **46.2** situé hors du carter de boîte d'essieu **12.** Le bouchon **46** présente une cavité **46.3** de logement du corps du capteur **44.2** et du câble de connexion **44.4.** Le presse-étoupe **44.5** clôt cette cavité **46.3** à son extrémité extérieure, au niveau du prolongement externe **46.2.** De préférence, une étanchéité est constituée entre le presse-étoupe **44.5** ou le câble **44.4** et le prolongement **46.2,** qui peut notamment être réalisée par sertissage du presse-étoupe **44.5,** ou par tout autre moyen de fixation étanche du câble **44.4** ou du presse-étoupe **44.5** au prolongement **46.2.**

Le corps **44.2** du capteur est quant à lui logé dans la cavité **46.3,** au niveau de la traversée **46.1,** sans contact avec le bouchon **46,** un jeu fonctionnel étant prévu pour conférer au capteur **44** au moins un premier degré de liberté de translation perpendiculairement au plan de la figure **1****,** un deuxième degré de liberté de translation situé dans le plan de la figure **1** et perpendiculaire à l'axe de rotation de la fusée d'essieu, un troisième degré de liberté de translation parallèle à l'axe de la fusée d'essieu et un degré de liberté de rotation autour d'un axe parallèle à l'axe de rotation de la fusée d'essieu. Ce jeu est de l'ordre de quelques millimètres, et destiné, comme on le verra plus loin, d'une part à permettre un positionnement précis du capteur **44** dans le logement **32.11**, indépendamment du positionnement du bouchon **46** lors du montage, et d'autre part à éviter tout interférence entre le corps du capteur et le bouchon dans les phases ultérieures de l'utilisation du dispositif. Naturellement, le câble **44.4** présente une flexibilité compatible avec ce jeu.

La traversée **46.1** présente un épaulement **46.11** d'appui sur le couvercle **12.2** du carter, sur le pourtour de l'orifice **12.21.** Cet épaulement **46.11** peut le cas échéant être pourvu d'un joint d'étanchéité (non représenté). La traversée **46.1** et le prolongement externe **46.2** présentent en outre des trous de fixation **46.12, 46.22** permettant de fixer le bouchon au couvercle de carter **12.2** par l'intermédiaire de vis de fixation **46.4.** Le bouchon présente enfin des puits d'accès **46.5** situés en regard des vis de fixation **44.32** du capteur **44** et permettant, une fois le bouchon **46** positionné dans l'orifice **12.21,** d'accéder aux vis de fixation **44.32** du capteur à l'aide d'un outil, dans l'exemple de réalisation une clé à six pans. Ces puits d'accès **46.5** sont des trous filetés constitués dans le prolongement extérieur **46.2** du bouchon et, dans l'état représenté sur la figure **2**, ils ont été obturés par des capuchons **46.6** également filetés. En regard des vis de fixation **44.32,** le bouchon **46** est pourvu de pattes de détrompage **46.13** présentant chacune un alésage **46.14** dans l'axe d'un des puits d'accès **46.5** pour le passage de l'outil de montage des vis **44.32.**

Le capteur **44** et le bouchon **46** forment ensemble un sous-ensemble unitaire **48** qui peut être positionné et fixé précisément après la fermeture du couvercle **12.2** de la boîte d'essieu et peut également être démonté et remonté a posteriori sans autre intervention sur le carter **12** de la boîte d'essieu.

Le préassemblage de ce sous-ensemble **48** est effectué comme suit. Dans un premier temps, on positionne les vis **44.32** dans les trous de passage **44.31** du corps du capteur **44.** Le câble **44.4,** préalablement connecté au capteur **44** est alors inséré dans le prolongement externe **46.2** et le presse étoupe **44.5** alors que le corps **44.2** du capteur **44** est introduit dans le logement **46.3** du bouchon **46.**

Le montage dans la boîte d'essieu du sous-ensemble préassemblé **48** peut alors être effectué de la manière suivante. On suppose ici que le palier à roulement **14,** équipé du déflecteur fixe **32.1,** a été préalablement monté sur la fusée d'essieu **10** dans le carter de boîte d'essieu **12,** dont le couvercle **12.2** a été refermé. L'orifice **12.21** étant positionné en regard du logement **32.11,** on vient insérer le sous-ensemble **48** dans l'orifice **12.21.** Les vis **44.32** coulissent alors dans les trous de passage **44.31** jusqu'à ce que leurs têtes viennent en butée contre les pattes de détrompage **46.13,** empêchant la mise en place complète du capteur **44,** l'épaulement **46.11** restant à distance du couvercle **12.2.** A ce stade, le capteur **44** est libre de se mouvoir dans son logement **46.3,** du fait des jeux fonctionnels évoqués précédemment, et la tête de lecture **44.1** trouve tout naturellement sa place dans le logement **32.11,** ceci malgré les éventuelles imprécisions de positionnement du couvercle **12.2** par rapport au déflecteur fixe **32.1.** Une fois la tête de lecture **44.1** du capteur correctement engagée dans le logement **32.11,** il est possible de venir fixer le capteur **44** au déflecteur fixe **32.1,** en insérant un outil par les puits d'accès **46.5** et les alésages **46.14,** pour visser les vis de fixation **44.32** du capteur au niveau de l'interface de maintien **44.3.** Cette étape achevée, il est possible d'achever le positionnement du bouchon, jusqu'à ce que l'épaulement **46.11** vienne en butée contre le couvercle **12.2.** il reste à visser les vis **46.4** de fixation du bouchon et les capuchons **46.6** d'obturation des puits d'accès **46.5.**

Pour le démontage, on procède étape par étape dans l'ordre inverse du montage.

Le jeu fonctionnel préservé entre le capteur **44** et le bouchon **46** permet ainsi de compenser tous les écarts de montage entre le déflecteur et le couvercle, et notamment le décalage axial, radial et les défauts de parallélisme. Le jeu fonctionnel entre le capteur **44** et le bouchon **46** est également utile hors des phases de montage et de démontage, puisqu'il permet d'éviter que des contraintes mécaniques ne soient exercées sur le capteur **44,** notamment du fait de chocs lors du roulage, ou de déformations thermiques différentielles.

Naturellement, diverses variantes sont envisageables.

Le déflecteur **32.1** et le couvercle **12.2** sont préférentiellement pourvus de moyens d'indexation angulaire par rapport au corps du carter **12.1,** pour assurer un positionnement au moins approximatif de l'orifice **12.21** en regard du logement **32.11.** On peut également envisager une indexation directe du déflecteur **32.1** par rapport au couvercle **12.1.**

A la place des pattes de détrompage **46.13** dont le rôle est d'éviter d'oublier l'étape de fixation du capteur au déflecteur, on peut prévoir un dispositif de fixation qui permette dans un même mouvement continu de montage ou de démontage, par exemple dans un même mouvement continu de vissage ou de dévissage, de séquencer la fixation du capteur au niveau de l'interface de maintien **44.3** puis la fixation du bouchon **46** sur le carter **12,** ou la libération du capteur **44** puis celle du bouchon **46.** On peut prévoir des moyens de fixation réversible et séquencée qui ne soient pas des vis.

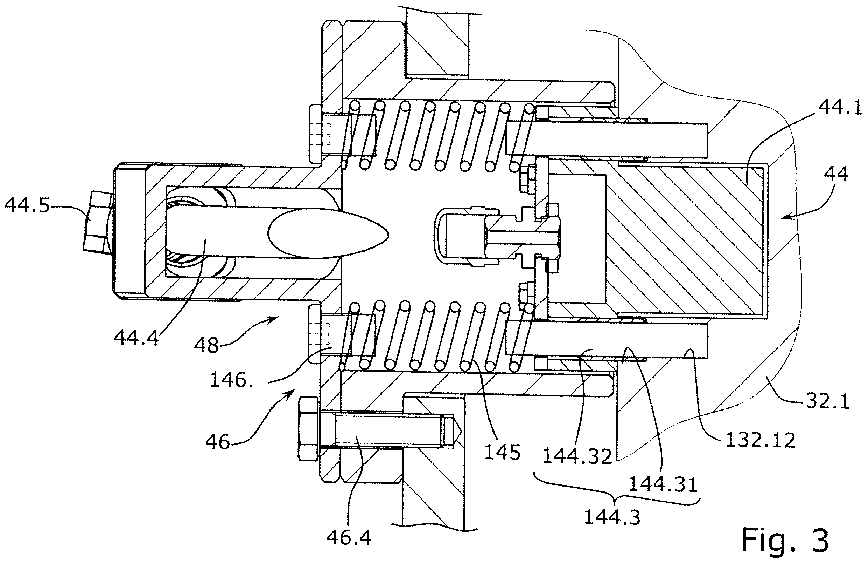

Dans cet esprit et selon une variante de réalisation illustrée sur la figure **3****,** l'interface de maintien **144.3** du capteur est réalisée par des ressorts de compression **145,** chacun guidé à une extrémité par une goujon **144.32** vissée dans un alésage **144.31** du corps du capteur **44** et coulissant dans un alésage **132.12** du capteur, et à l'extrémité opposée par un prolongement axial du bouchon **146.5.** Le capteur est ainsi positionné grâce aux goujons **144.32** et maintenu en appui contre le déflecteur fixe **32.1** plaqué par les ressorts **145** bandés entre le capteur **44** et le fond du bouchon **46.** Les autres caractéristiques du dispositif restent inchangées, et notamment le jeu fonctionnel entre le corps du capteur **44** et les parois du bouchon **46,** rendu possible par les mouvements de compression et de flexion du ressort **145.** Lors du préassemblage du sous-ensemble **48,** les ressorts **145** sont mis légèrement en compression. Le sous-ensemble **48** préassemblé peut ensuite être monté dans la boîte d'essieu en un mouvement continu, les goujons **144.32** pénétrant d'eux-mêmes dans les alésages **132.12** pour le positionnement précis du capteur **44** dans le déflecteur fixe **32.1,** le vissage des vis de fixation **46.4** permettant une mise en compression des ressort **145.**

D'autres variantes sont envisageables.

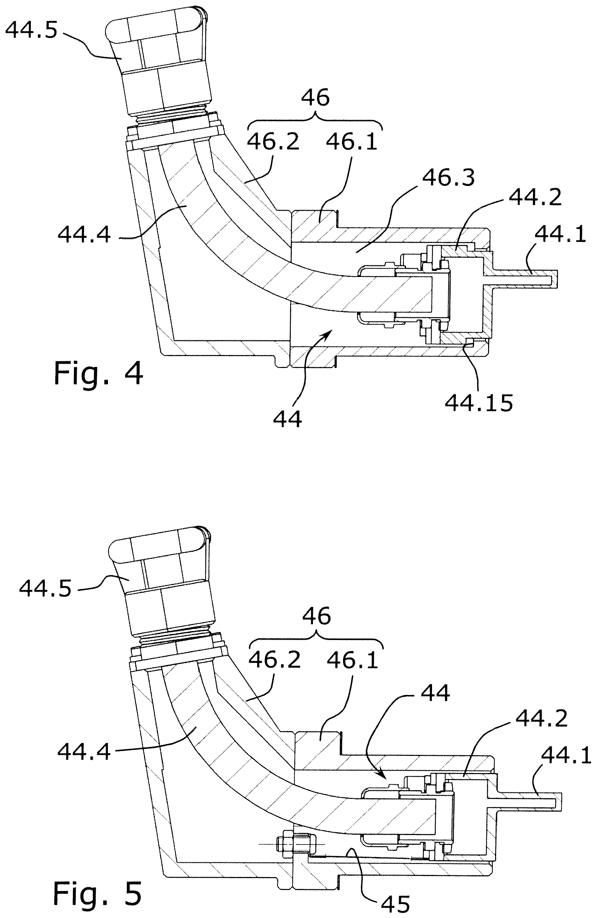

Sur la figure **4** est représentée une variante du capteur **44,** destinée à éviter des détériorations du câble. Le corps **44.2** du capteur **44** est en tous points semblable à celui du premier mode de réalisation, et est logé comme précédemment dans une cavité **46.3** du bouchon **46,** sans contact avec le bouchon **46,** un jeu fonctionnel étant prévu pour conférer au capteur **44** au moins trois degrés de liberté de translation et un degré de liberté de rotation. Le bouchon comporte à son extrémité la plus proche du roulement un épaulement **46.15,** qui limite sans l'éliminer la plage de mouvement de translation du corps **44.2** du capteur **44** hors du bouchon **46.** En cas d'erreur de manipulation au démontage, par exemple au cas où le bouchon **46** serait désolidarisé du carter **12** avant que le capteur **44** ait été désolidarisé du déflecteur, l'extraction du bouchon se trouverait bloquée par l'interférence entre le corps **44.2** du capteur et l'épaulement **46.15,** et ce jusqu'à ce que le capteur ait été désolidarisé du déflecteur. On évite ainsi un potentiel endommagement du câble lors d'un démontage inadéquat.

Suivant une autre variante représentée sur la figure **5****,** il est possible d'arriver au même résultat en prévoyant un cordon fixé **45** par une extrémité au bouchon **46** et par une autre au corps **44.2** du capteur **44.** Ce cordon **45** n'entrave pas la liberté de mouvement du corps du capteur dans le bouchon, dans les conditions normales d'utilisation. Si toutefois un opérateur tente de démonter le bouchon **46** avant d'avoir libéré le capteur **44,** le cordon **45** se tend et s'oppose au démontage.

D'autres variantes peuvent être envisagées.

L'orifice **12.21** peut être réalisé dans le corps de carter **12.1,** le capteur **44** étant inséré radialement, c'est-à-dire perpendiculairement à l'axe de rotation de la fusée d'essieu **10,** plutôt que parallèlement à cet axe.

Une fonction de déflecteur peut être attribuée au support **40.1** de l'anneau codeur.

Le capteur **44** et le codeur **40** décrits dans l'exemple de réalisation illustré sur les figures sont particulièrement adaptés à la mesure de la vitesse de rotation de la fusée d'essieu **10,** mais peuvent également permettre de mesurer d'autres grandeurs telles que le positionnement angulaire, le débattement axial ou des données relatives à distribution de température au niveau du roulement ou de la fusée d'essieu. Le codeur peut également, suivant un autre mode de réalisation, être une antenne reliée à un dispositif de mesure intégré à la partie tournante du roulement ou de la fusée d'essieu, par exemple un dispositif de mesure d'une pression pneumatique dans un cas d'application à un essieu de véhicule sur pneumatiques.

Il est possible de prévoir de remplir la cavité **46.3** d'une mousse ou d'un matériau n'entravant pas la liberté de mouvement du capteur **44** par rapport au bouchon **46.**

## Revendications

1. Assemblage instrumenté comportant :
- un carter (12) comportant un corps de carter (12.1) et un couvercle (12.2) fermant le corps de carter (12.1), le carter comportant un orifice (12.21),
- un palier à roulement (14) logé dans le carter, comportant au moins une bague fixe (18) par rapport au carter et une bague tournante (16A),
- un déflecteur annulaire fixe (32.1) solidaire de la bague fixe (18),
- un codeur annulaire tournant (40) solidaire de la bague tournante (16A),
- un capteur (44) comportant au moins une tête de lecture (44.1), un corps de capteur (44.2) solidaire de la tête de lecture (44.1) et un câble électrique de connexion (44.4), la tête de lecture (44.1) étant positionnée et maintenue en appui sur le déflecteur annulaire fixe (32.1) ou la bague fixe (18) par une interface de maintien (44.3) et disposée en regard et à distance d'entrefer du codeur (40),
- un bouchon (46) traversé par le câble de connexion (44.4), le bouchon (46) obturant l'orifice (12.21) et étant pourvu d'une interface de fixation au carter,
**caractérisé en ce que** le bouchon (46) présente une cavité pour loger au moins une partie du corps de capteur (44.2) avec un jeu fonctionnel conférant au corps de capteur (44.2) au moins trois degrés de liberté de translation et un degré de liberté de rotation par rapport au bouchon (46).

2. Assemblage selon la revendication 1, **caractérisé en ce que** le bouchon (46) et le capteur (44) forment un sous-ensemble d'instrumentation cohérent, le capteur (44) étant extractible du carter (12) par l'orifice (12.21) avec le bouchon (46) après désolidarisation de l'interface de maintien du capteur (44.3) et de l'interface de fixation du bouchon.

3. Assemblage selon l'une quelconque des revendications précédentes, **caractérisé en ce qu'**une extrémité du câble (44.4) est fixée au bouchon (46).

4. Assemblage selon l'une quelconque des revendications précédentes, **caractérisé en ce que** l'interface de fixation du bouchon comporte au moins une vis de fixation (46.4) coopérant avec un trou fileté du carter (12).

5. Assemblage selon l'une quelconque des revendications précédentes, **caractérisé en ce que** l'interface de maintien (44.3) du capteur comporte au moins une vis de fixation (44.32) coopérant avec un trou fileté du déflecteur.

6. Assemblage selon la revendication 5, **caractérisé en ce que** le bouchon (46) est pourvu d'au moins un puits d'accès (46.5) pour accéder à la vis de fixation (44.32) du capteur lorsque le bouchon (46) obture l'orifice du carter (12).

7. Assemblage selon la revendication 6, **caractérisé en ce que** le puits d'accès (46.5) est fermé par un capuchon (46.6).

8. Assemblage selon l'une quelconque des revendications 1 à 4, **caractérisé en ce que** l'interface de maintien comporte au moins un ressort comprimé entre le bouchon et le corps du capteur.

9. Assemblage selon l'une quelconque des revendications précédentes, **caractérisé en ce que** le carter (12) est une boîte d'essieu de véhicule.

10. Sous-ensemble d'instrumentation pour un assemblage comportant un carter (12) comportant un corps de carter (12.1) et un couvercle (12.2) fermant le corps de carter (12.1)), le carter comportant un orifice (12.21), l'assemblage comportant en outre un palier à roulement (14) logé dans le carter, comportant au moins une bague fixe (18) par rapport au carter et une bague tournante (16A), un déflecteur annulaire fixe (32.1) solidaire de la bague fixe (18), et un codeur annulaire tournant (40) solidaire de la bague tournante (16A),, le sous-ensemble comportant
- un capteur (44) comportant au moins une tête de lecture (44.1), un corps de capteur (44.2) solidaire de la tête de lecture et un câble électrique de connexion (44.4), la tête de lecture (44.1) étant apte à être positionnée et maintenue en appui sur le déflecteur annulaire fixe ou la bague fixe par une interface de maintien (44.3) et à être disposée en regard et à distance d'entrefer du codeur (40), et
- un bouchon (46) traversé par le câble de connexion (44.4), le bouchon (46) étant apte à obturer l'orifice (12.21) et comportant une interface de fixation au carter, **caractérisé en ce que** le bouchon comporte au moins une cavité pour loger au moins une partie du corps de capteur (44.2) avec un jeu fonctionnel conférant au corps de capteur (44.2) au moins trois degrés de liberté de translation et un degré de liberté de rotation par rapport au bouchon (46).

11. Sous ensemble d'instrumentation selon la revendication précédente, **caractérisé en ce que** le bouchon (46) comporte un puits d'accès (12.21) pour accéder à l'interface de maintien du capteur (44.3).

12. Sous-ensemble d'instrumentation selon la revendication 10 ou la revendication 11, **caractérisé en ce qu'**il comporte en outre des moyens de liaison entre le capteur et le bouchon, aptes à empêcher le corps de capteur de sortir de la cavité.

13. Procédé d'assemblage d'un capteur sur un palier à roulement logé dans un carter (12) comportant un corps de carter (12.1) et un couvercle (12.2) fermant le corps de carter, comportant les étapes successives suivantes :
- montage du palier à roulement dans le corps de carter, de sorte que le palier comporte au moins une bague (18) fixe par rapport au carter et une bague tournante (16A),
- assemblage du couvercle (12.2) sur le corps de carter (12.1),
- insertion d'une tête de lecture (44.1) d'un capteur (44) par un orifice (12.21) ménagé dans le carter, le capteur (44) comportant un corps de capteur (44.2) logé au moins partiellement dans un bouchon (44) avec un jeu fonctionnel conférant au corps de capteur (44.2) au moins trois degrés de liberté de translation et un degré de liberté de rotation par rapport au bouchon (46) venant clore l'orifice (12.21),
- positionnement de la tête de lecture (44.1) en appui sur la bague fixe (18) ou un déflecteur fixe (32.1) rapporté sur la bague fixe
- fixation du bouchon (44) au carter (12).

14. Procédé d'assemblage selon la revendication 13, **caractérisé en ce que** l'étape de positionnement de la tête de lecture précède l'étape de fixation du bouchon.

15. Procédé d'assemblage selon la revendication 13, **caractérisé en ce que** l'étape de positionnement de la tête de lecture et l'étape de fixation du bouchon sont concomitantes.

16. Procédé selon l'une quelconque des revendications 13 à 15, **caractérisé en ce que** l'étape de positionnement comporte un vissage d'une vis de fixation (44.32) du capteur au travers d'au moins un puits d'accès (46.5) ménagé dans le bouchon.

## Patentansprüche

1. Instrumentierte Anordnung, die folgendes umfasst:
- ein Gehäuse (12), welches einen Gehäusekörper (12.1) und einen den Gehäusekörper (12.1) schließenden Deckel (12.2) umfasst, wobei das Gehäuse eine Öffnung (12.21) aufweist,
- ein im Gehäuse gelagertes Wälzlager (14), welches mindestens einen in Bezug auf das Gehäuse feststehenden Ring (18) und einen sich drehenden Ring (16A) umfasst,
- ein feststehendes ringförmiges Leitblech (32.1), das fest mit dem feststehenden Ring (18) verbunden ist,
- einen sich drehenden, ringförmigen Kodierer (40), der mit dem sich drehenden Ring (16A) fest verbunden ist,
- einen Sensor (44), welcher mindestens einen Lesekopf (44.1), einen fest mit dem Lesekopf (44.1) verbundenen Sensorkörper (44.2) und ein elektrisches Verbindungskabel (44.4) umfasst, wobei der Lesekopf (44.1) am feststehenden ringförmigen Leitblech (32.1) oder dem feststehenden Ring (18) über eine Stützfläche (44.3) positioniert und in Position gehalten wird, und gegenüber dem Kodierer (40) im Luftspaltsabstand angeordnet ist,
- einen Stopfen (46), durch den das Verbindungskabel (44.4) verläuft, wobei der Stopfen (46) die Öffnung (12.21) verschließt und mit einer Fläche zur Befestigung am Gehäuse versehen ist, **dadurch gekennzeichnet, dass** der Stopfen (46) einen Hohlraum zur Aufnahme von mindestens einem Teil des Sensorkörpers (44.2) aufweist, wobei ein funktionales Spiel dem Sensorkörper (44.2) relativ zum Stopfen (46) mindestens drei translatorische Freiheitsgrade und ein Rotations-Freiheitsgrad verleiht.

2. Anordnung nach Anspruch 1, **dadurch gekennzeichnet, dass** der Stopfen (46) und der Sensor (44) eine kohärente Instrumentierungs-Teilbaugruppe bilden, wobei der Sensor (44) mit dem Stopfen (46) über die Öffnung (12.21) aus dem Gehäuse (12) gezogen werden kann, nachdem sich der Sensor von der Stützfläche des Sensors (44.3) und der Befestigungsfläche des Stopfens gelöst hat.

3. Anordnung nach einem der vorhergehenden Ansprüche, **dadurch gekennzeichnet, dass** ein Ende des Kabels (44.4) am Stopfen (46) befestigt ist.

4. Anordnung nach einem der vorhergehenden Ansprüche, **dadurch gekennzeichnet, dass** die Befestigungsfläche des Stopfens mindestens eine Befestigungsschraube (46.4) aufweist, welche mit einer Gewindebohrung des Gehäuses (12) zusammenwirkt.

5. Anordnung nach einem der vorhergehenden Ansprüche, **dadurch gekennzeichnet, dass** die Stützfläche (44.3) des Sensors mindestens eine Befestigungsschraube (44.32) aufweist, die mit einer Gewindeöffnung des Leitblechs zusammenwirkt.

6. Anordnung nach Anspruch 5, **dadurch gekennzeichnet, dass** der Stopfen (46) mit mindestens einem Zugangskanal (46.5) versehen ist, um Zugang zur Befestigungsschraube (44.32) des Sensors zu haben, wenn der Stopfen (46) die Öffnung des Gehäuses (12) verschließt.

7. Anordnung nach Anspruch 6, **dadurch gekennzeichnet, dass** der Zugangskanal (46.5) mit einer Kappe (46.6) verschlossen ist.

8. Anordnung nach einem der Ansprüche 1 bis 4, **dadurch gekennzeichnet, dass** die Stützfläche zwischen Stopfen und Sensorkörper mindestens eine zusammengedrückte Feder aufweist.

9. Anordnung nach einem der vorhergehenden Ansprüche, **dadurch gekennzeichnet, dass** das Gehäuse (12) ein Achslager eines Fahrzeugs ist.

10. Instrumentierungs-Teilbaugruppe für eine Anordnung, welche ein Gehäuse (12) mit einem Gehäusekörper (12.1) und einen den Gehäusekörper (12.1) schließenden Deckel (12.2) umfasst, wobei das Gehäuse eine Öffnung (12.21) umfasst, und die Anordnung des Weiteren ein im Gehäuses lagerndes Wälzlager (14) umfasst, das mindestens einen in Bezug auf das Gehäuse feststehenden Ring (18) und einen sich drehenden Ring (16A), ein mit dem feststehenden Ring (18) fest verbundenes feststehendes ringförmiges Leitblech (32.1) und einen mit dem sich drehenden Ring (16A) verbundenen, sich drehenden ringförmigen Kodierer (40) umfasst, wobei die Teilbaugruppe folgendes umfasst:
- einen Sensor (44), der mindestens einen Lesekopf (44.1), einen fest mit dem Lesekopf verbundenen Sensorkörper (44.2) und ein elektrisches Verbindungskabel (44.4) umfasst, wobei der Lesekopf (44.1) über eine Stützfläche (44.3) an dem ringförmigen feststehenden Leitblech oder dem feststehenden Ring positioniert und in Position gehalten und gegenüber dem Kodierer (40) im Luftspaltsabstand angeordnet werden kann, und
- einen Stopfen (46), durch welchen das Verbindungskabel (44.4) verläuft, wobei der Stopfen (46) die Öffnung (12.21) verschließen kann und eine Fläche zur Befestigung am Gehäuse aufweist, **dadurch gekennzeichnet, dass** der Stopfen mindestens einen Hohlraum zur Aufnahme von mindestens einem Teil des Sensorkörpers (44.2) aufweist und ein funktionales Spiel, das dem Sensorkörper (44.2) relativ zum Stopfen (46) mindestens drei translatorische Freiheitsgrade und ein Rotations-Freiheitsgrad verleiht.

11. Instrumentierungs-Teilbaugruppe nach dem vorhergehenden Anspruch, **dadurch gekennzeichnet, dass** der Stopfen (46) einen Zugangskanal (12.21) umfasst, um Zugang zur Stützfläche des Sensors (44.3) zu haben.

12. Instrumentierung-Teilbaugruppe nach Anspruch 10 oder Anspruch 11, **dadurch gekennzeichnet, dass** sie des Weiteren Anordnungsmittel zwischen dem Sensor und dem Stopfen aufweist, die in der Lage sind, den Sensorkörper daran zu hindern, aus dem Hohlraum auszutreten.

13. Verfahren zur Anordnung eines Sensors auf einem Wälzlager, das in einem Gehäuse (12) lagert, welches einen Gehäusekörper (12.1) und einen den Gehäusekörper schließenden Deckel (12.2) umfasst, das aus den folgenden aufeinanderfolgenden Schritten beruht:
- Montage des Wälzlagers im Gehäusekörper, sodass das Lager mindestens einen relativ zum Gehäuse feststehenden Ring (18) und einen sich drehenden Ring (16A) aufweist,
- Montage des Deckels (12.2) auf dem Gehäusekörper (12.1),
- Einfügen des Lesekopfes (44.1) eines Sensors (44) über eine im Gehäuse ausgebildeten Öffnung (12.21), wobei der Sensor (44) einen Sensorkörper (44.2) aufweist, der mindestens teilweise in einem Stopfen (44) lagert und ein funktionales Spiel, das dem Sensorkörper (44.2) mindestens drei translatorische Freiheitsgrade und ein Rotations-Freiheitsgrad relativ zum Stopfen (46), welcher die Öffnung (12.21) verschließt, verleiht,
- Positionierung des Lesekopfes (44.1) am feststehenden Ring (18) oder einem feststehenden Leitblech (32.1), das an den feststehenden Ring angesetzt ist,
- Befestigung des Stopfens (44) am Gehäuse (12).

14. Anordnungsverfahren nach Anspruch 13, **dadurch gekennzeichnet, dass** der Schritt der Positionierung des Lesekopfes dem Schritt der Befestigung des Stopfens vorangeht.

15. Anordnungsverfahren nach Anspruch 13, **dadurch gekennzeichnet, dass** der Schritt der Positionierung des Lesekopfes und der Schritt der Befestigung des Stopfens zeitgleich erfolgen.

16. Verfahren nach einem der Ansprüche 13 bis 15, **dadurch gekennzeichnet, dass** der Schritt der Positionierung das Einschrauben einer Befestigungsschraube (44.32) des Sensors durch mindestens einen im Stopfen ausgebildeten Zugangskanal (46.5) umfasst.

## Claims

1. An instrumented assembly comprising:
- a housing (12) comprising a housing body (12.1) and a cover (12.2) closing the housing body (12.1), with the housing (12) comprising an opening (12.21),
- a rolling bearing (14) received in the housing, comprising at least one ring (18) that is fixed relative to the housing and a rotating ring (16A);
- a fixed annular deflector (32.1) secured to the fixed ring (18);
- a rotating annular encoder (40) secured to the rotating ring (16A);
- a sensor (44) comprising at least one reading head (44.1), a sensor body (44.2) secured to the reading head (44.1) and an electrical connection cable (44.4), with the reading head (44.1) being positioned on and maintained in bearing contact with the fixed annular deflector (32.1) or with the fixed ring (18) by a holding interface (44.3) and facing the encoder (40), at a distance therefrom,
- a plug (46) through which the connecting cable (44.4) extends, with the plug (46) closing the opening (12.21) and being provided with an interface for attachment to the housing,
**characterized in that** the plug (46) has a cavity for receiving at least a portion of the sensor body (44.2) with a functional clearance which provides the sensor body (44.2) with at least three degrees of freedom in translation and one degree of freedom in rotation relative to the plug (46).

2. An assembly according to claim 1, **characterized in that** the plug (46) and the sensor (44) form a coherent instrumentation sub-assembly, with the sensor (44) being removable from the housing (12) through the opening (12.21) with the plug (46) after the sensor holding interface (44.3) and the plug attachment interface have been disconnected.

3. An assembly according to any one of the preceding claims, **characterized in that** one end of the cable (44.4) is attached to the plug (46).

4. An assembly according to any one of the preceding claims, **characterized in that** the plug attachment interface comprises at least one fastening screw (46.4) cooperating with a threaded hole of the housing (12).

5. An assembly according to any one of the preceding claims, **characterized in that** the sensor holding interface (44.3) comprises at least one fastening screw (44.32) cooperating with a threaded hole of the deflector.

6. An assembly according to claim 5, **characterized in that** the plug (46) is provided with at least one access shaft (46.5) for accessing the sensor fastening screw (44.32) when the plug (46) closes the housing (12) opening.

7. An assembly according to claim 6, **characterized in that** the access shaft (46.5) is closed by a cap (46.6).

8. An assembly according to any one of claims 1 to 4, **characterized in that** the holding interface comprises at least one spring compressed between the plug and the sensor body.

9. An assembly according to any one of the preceding claims, **characterized in that** the housing (12) is the axle box of a vehicle.

10. An instrumentation sub-assembly for an assembly comprising a housing (12) comprising a housing body (12.1) and a cover (12.2) closing the housing body (12.1), with the housing comprising an opening (12.21), with the assembly further comprising a rolling bearing (14) received in the housing, comprising at least one ring (18) that is fixed relative to the housing and a rotating ring (16A), a fixed annular deflector (32.1) secured to the fixed ring (18), and a rotating annular encoder (40) secured to the rotating ring (16A), with the sub-assembly comprising :
- a sensor (44) comprising at least one reading head (44.1), a sensor body (44.2) secured to the reading head and an electrical connection cable (44.4), with the reading head (44.1) being so designed as to be positioned on and maintained in bearing contact with the fixed annular deflector (32.1) or with the fixed ring (18) by a holding interface (44.3) and facing the encoder (40), at a distance therefrom, and
- a plug (46) through which the connecting cable (44.4) extends, with the plug (46) being intended to close the opening (12.21) and being provided with an interface for attachment to the housing,
**characterized in that** the plug has at least a cavity for receiving at least a portion of the sensor body (44.2) with a functional clearance which provides the sensor body (44.2) with at least three degrees of freedom in translation and one degree of freedom in rotation relative to the plug (46).

11. An instrumentation sub-assembly according to the preceding claim, **characterized in that** the plug (46) comprises an access shaft (12.21) for accessing the sensor holding interface (44.3).

12. An instrumentation sub-assembly according to claim 10 or claim 11, **characterized in that** it further comprises means for connecting the sensor and the plug, so designed as to prevent the sensor body from exiting the cavity.

13. A method for assembling a sensor on a rolling bearing received in a housing (12) comprising a housing body (12.1) and a cover (12.2) which closes the housing body, comprising the following successive steps:
- mounting the rolling bearing in the housing body, so that the bearing comprises at least one ring (18) fixed relative to the housing and one rotating ring (16A),
- assembling the cover (12.2) on the housing body (12.1),
- inserting a reading head (44.1) of a sensor (44) through an opening (12.21) provided in the housing, with the sensor (44) comprising a sensor body (44.2) at least partially received in a plug (44) with a functional clearance which provides the sensor body (44.2) with at least three degrees of freedom in translation and one degree of freedom in rotation relative to the plug (46) closing the opening (12.21),
- positioning the reading head (44.1) in bearing contact with the fixed ring (18) or a fixed deflector (32.1) attached to the fixed ring,
- attaching the plug (44) to the housing (12).

14. An assembling method according to claim 13, **characterized in that** the step of positioning the reading head comes before the step of attaching the plug.

15. An assembling method according to claim 13, **characterized in that** the step of positioning the reading head and the step of attaching the plug are concomitant.

16. A method according to any one of claims 13 to 15, **characterized in that** the step of positioning comprises screwing a sensor fastening screw (44.32) through at least one access shaft (46.5) provided in the plug.
